# FASCICULE DE BREVET EUROPEEN

(11) **EP 0 501 893 B1**
(45) Date de publication et mention de la délivrance du brevet: **27.09.1995**
(21) Numéro de dépôt: 92400524.2
(22) Date de dépôt: 28.02.1992
(51) Int. Cl.: B29C 63/00

(54) **Procédé et dispositif pour ôter une couche de matériau thermoplastique déposée sur un substrat**
Verfahren und Vorrichtung zum Abziehen einer thermoplastischen Schicht von einem Substrat
Process and apparatus for removing a thermoplastic layer from a substrate

(30) Priorité: 01.03.1991 FR 9102465
(43) Date de publication de la demande: 02.09.1992
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Marlin, Pascal, F-95800 Cergy Pontoise (FR)
(74) Mandataire: Le Moenner, Gabriel

(56) Documents cités:
- EP-A- 0 225 570
- US-A- 3 924 794
- PATENT ABSTRACTS OF JAPAN vol. 7, no. 223 (M-247)(1368) 4 Octobre 1983 & JP-A-58 118 207 (FUJI SEAL KOGYO K.K.) 14 Juillet 1983
- PATENT ABSTRACTS OF JAPAN vol. 12, no. 484 (M-776)(3331) 16 Décembre 1988 & JP-A-63 202 409 (MITSUBISHI KASEI VINYL CO) 22 Août 1988
- PATENT ABSTRACTS OF JAPAN vol. 7, no. 197 (M-239)(1342) 27 Août 1983 & JP-A-58 096 517 (FUROKAWA DENKI KOGYO K.K.) 8 Juin 1983
- PATENT ABSTRACTS OF JAPAN vol. 14, no. 383 (E-966) 17 Août 1990 & JP-A-2 139 932 (TOSHIBA CORP) 29 Mai 1990

## Description

La présente invention concerne un procédé pour dénuder une zone d'un substrat revêtu d'une couche adhérente de matériau thermoplastique et un dispositif pour la mise en oeuvre de ce procédé.

De nombreux substrats ou éléments structurels, notamment métalliques, sont revêtus d'une couche adhérente de matériau thermoplastique de protection ou d'isolation ayant une épaisseur entre 100 microns et 1 mm environ, et pour pouvoir travailler, par exemple assembler, le substrat revêtu, il est nécessaire d'ôter, au moins localement, la couche de matériau thermoplastique. Cette couche de matériau plastique peut être ôtée mécaniquement, par découpe et arrachage ou repoussage mais le procédé le plus couramment utilisé est un procédé chimique par trempage du substrat revêtu dans un bain d'acide chaud. Ces deux approches se révèlent longues et délicates à mettre en oeuvre, relativement onéreuses, et nécessitant un personnel qualifié.

La présente invention a pour objet de proposer un procédé du type sus-mentionné particulièrement simple et rapide à mettre en oeuvre, peu onéreux, ne nécessitant pas de main d'oeuvre qualifiée et autorisant une automatisation poussée.

Pour ce faire, selon une caractéristique de l'invention, le procédé comprend les étapes de diriger sur une zone de la couche de matériau thermoplastique, suivant un angle par rapport à une direction orthogonale à la zone, un jet conformé de gaz inerte chaud, typiquement en forme de rideau, et d'effectuer un déplacement relatif du jet par rapport au substrat revêtu pour repousser le matériau thermoplastique fondu.

Selon des aspects plus particuliers de l'invention, le gaz inerte contient majoritairement de l'hélium et la température du gaz inerte éjecté est comprise entre 300 et 700°C.

La présente invention a également pour objet un dispositif pour la mise en oeuvre du procédé, caractérisé en ce qu'il comprend au moins une buse profilée de projection d'un jet de gaz, reliée à une source de gaz inerte via un circuit comportant un moyen de chauffage, constitué avantageusement d'une résistance électrique disposée dans le circuit, au voisinage de la buse, laquelle est avantageusement conformée en relation avec la forme du substrat à dénuder, en particulier en forme de fente pour le dénudage de feuillards.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 représente schématiquement un dispositif pour la mise en oeuvre du procédé selon l'invention ; et
- la figure 2 est une vue en perspective d'un détail d'un mode de réalisation particulier d'un dispositif selon l'invention.

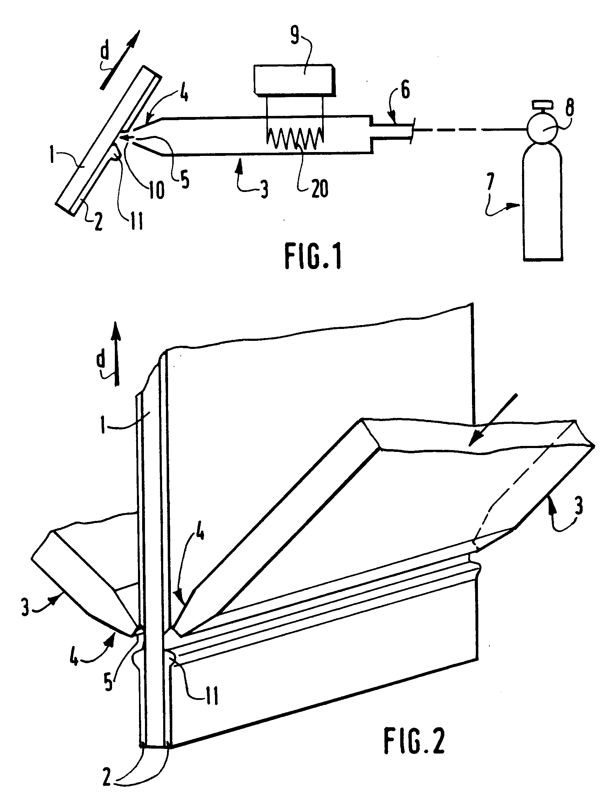

On a représenté sur la figure 1 un substrat 1, par exemple métallique, recouvert d'une couche de matériau thermoplastique 2 présenté à un dispositif selon l'invention, constitué essentiellement d'une tête de projection de gaz 3 comportant, à une extrémité, une buse de projection 4 munie d'une ouverture d'éjection profilée 5 et reliée par une ligne 6 à une source de gaz 7, en l'occurrence une bouteille de mélange gazeux sous pression munie d'un détendeur 8. La tête 3 comporte une résistance chauffante 20 disposée dans le trajet du gaz entre la ligne 6 et l'orifice 5 et dont la température est régulée par un bloc électronique de régulation 9.

Pour dénuder la surface du substrat 1, la buse 4 est disposée à proximité de la zone revêtue du substrat 1 et un courant de gaz en provenance de la source 7 et chauffé par la résistance 20 est éjecté par l'ouverture 5 sous la forme d'un rideau de gaz, comme figuré par la flèche 10, sur la couche de matériau thermoplastique de façon à fondre et désolidariser localement cette dernière du substrat 1. Typiquement, le jet de gaz 10 est orienté suivant un angle par rapport à une direction orthogonale à la zone d'impact de façon à former latéralement un bourrelet de matériau thermoplastique fondu 11 et le substrat revêtu est déplacé par rapport à la tête 3 dans la direction figurée par la flèche D, de manière que le jet 10 maintienne à l'état fondu le bourrelet 11 et repousse continûment ce dernier par rapport à la surface progressivement dénudée du substrat 1.

Selon un aspect de l'invention, le gaz utilisé est un gaz ou un mélange de gaz inertes choisi dans le groupe comprenant l'azote, l'hélium, l'argon ou leurs mélanges, de préférence un mélange d'hélium avec un des autres gaz contenant entre 50 et 90 % d'hélium. La température du gaz est comprise entre la température de fusion du matériau thermoplastique et la température de ramollissement du substrat, typiquement entre 300°C et 700°C.

On a représenté sur la figure 2 un mode de réalisation d'un dispositif selon l'invention adapté au dénudage d'un feuillard métallique revêtu sur ses deux faces d'une couche de matériau revêtu sur chaque face d'un film de polyéthylène haute densité. De tels feuillards sont utilisés dans la fabrication de blindages électromagnétiques pour câbles électriques dont la longueur impose de rabouter plusieurs feuillards les uns à la suite des autres par soudage, notamment à ultrasons. Pour effectuer le soudage, il est nécessaire d'enlever le revêtement sur les deux faces, la zone de revêtement enlevée étant reconstituée après soudage. Comme on le voit sur la figure 2, le dispositif selon l'invention comprend alors deux têtes 3 disposées symétriquement de part et d'autre du feuillard revêtu 1 et présentant chacun une buse oblongue 4 avec une fente d'éjection 5 d'extension correspondant sensiblement à la largeur de la surface à dénuder du feuillard 1 et éjectant le gaz sous la forme d'un rideau ayant la même extension latérale.

Dans cette application particulière, si l'azote pur, à une température supérieure à 600°C, donne des résultats satisfaisants, les meilleurs résultats sont obtenus avec de l'hélium pur à une température comprise entre 400 et 600°C et avec des mélanges hélium-argon et hélium-azote comprenant au moins 50 % d'hélium à une température entre 450 et 600°C. La pression de mélange gazeux délivrée par le détendeur 8 est réglée à une valeur très faible, de l'ordre de 1,1 x 10⁵ Pa et, pour un débit de l'ordre de 10 m³/h, on réalise le dénudage de surfaces de feuillards comprises entre 900 et 10 000 mm² en une durée comprise entre 1 et 3 minutes.

## Revendications

1. Procédé pour dénuder une zone d'un substrat (1) revêtu d'une couche adhérente (2) de matériau thermoplastique, caractérisé en ce qu'il comprend les étapes de diriger, sur la couche de matériau thermoplastique, suivant un angle par rapport à une direction orthogonale à la zone, un jet conformé (10) de gaz inerte chaud, et de déplacer le jet par rapport au substrat revêtu pour repousser le matériau thermoplastique fondu.

2. Procédé selon la revendication 1, caractérisé en ce que le gaz inerte est choisi dans le groupe comprenant l'azote, l'hélium, l'argon et leurs mélanges.

3. Procédé selon la revendication 2, caractérisé en ce que le gaz inerte contient majoritairement de l'hélium.

4. Procédé selon l'une des revendications 1 à 3, caractérisé en ce que la température du gaz inerte éjecté est comprise entre la température de fusion du matériau thermoplastique et la température de déformation du substrat.

5. Procédé selon l'une des revendications 1 à 4, caractérisé en ce que le substrat est métallique.

6. Procédé selon l'une des revendications 1 à 5, caractérisé en ce que le matériau thermoplastique est du polyéthylène.

7. Procédé selon la revendication 6, caractérisé en ce que le substrat est un feuillard d'aluminium et le jet de gaz (10) a la forme d'un rideau.

8. Procédé selon la revendication 7, caractérisé en ce que la température du gaz inerte est comprise entre 300 et 700°C.

9. Dispositif pour la mise en oeuvre du procédé selon l'une des revendications précédentes, caractérisé en ce qu'il comprend au moins une buse profilée (4) de projection d'un jet de gaz (10), reliée à une source de gaz inerte (7) via un circuit (6, 3) comportant un moyen de chauffage (20).

10. Dispositif selon la revendication 9, caractérisé en ce que la buse (4) présente une fente d'éjection (5) et le moyen de chauffage est constitué d'une résistance électrique (20) disposée dans le circuit (3), au voisinage de la buse (4).

## Claims

1. Process for baring a region of a substrate (1) coated with an adherent layer (2) of thermoplastic material, characterised in that it comprises the stages of directing, onto the layer of thermoplastic material, at an angle with respect to a direction orthogonal to the region, a shaped jet (10) of hot inert gas, and moving the jet with respect to the coated substrate in order to push back the melted thermoplastic material.

2. Process according to Claim 1, characterised in that the inert gas is chosen from the group comprising nitrogen, helium, argon and mixtures thereof.

3. Process according to Claim 2, characterised in that the inert gas contains a majority of helium.

4. Process according to one of Claims 1 to 3, characterised in that the temperature of the ejected inert gas lies between the melting point of the thermoplastic material and the substrate deformation temperature.

5. Process according to one of Claims 1 to 4, characterised in that the substrate is metallic.

6. Process according to one of Claims 1 to 5, characterised in that the thermoplastic material is polyethylene.

7. Process according to Claim 6, characterised in that the substrate is a strip of aluminium and the gas jet (10) is in the form of a curtain.

8. Process according to Claim 7, characterised in that the temperature of the inert gas is between 300 and 700°C.

9. Device for implementing the process according to one of the preceding claims, characterised in that it comprises at least one profiled nozzle (4) for projecting a gas jet (10), connected to a source of inert gas (7) via a circuit (6, 3) including a heating means (20).

10. Device according to Claim 9, characterised in that the nozzle (4) has an ejection slot (5) and the heating means consists of an electrical resistance (20) disposed in the circuit (3), in the vicinity of the nozzle (4).

## Patentansprüche

1. Verfahren zum Freilegen eines Bereichs eines Substrats (1), das mit einer klebenden Schicht (2) aus thermoplatischem Material überzogen ist, dadurch gekennzeichnet, daß bei dem Verfahren ein entsprechend geformter Strahl (10) aus heißem Inertgas unter einem Winkel zu einer zu dem Bereich orthogonal verlaufenden Richtung auf die Schicht aus thermoplastischem Material gerichtet wird und der Strahl gegenüber dem überzogenen Substrat verschoben wird, um das geschmolzene thermoplastische Material wegzudrücken.

2. Verfahren nach Anspruch 1, dadurch gekennzeichnet, daß das inerte Gas aus der aus Stickstoff, Helium, Argon und ihren Gemischen bestehenden Gruppe ausgewählt wird.

3. Verfahren nach Anspruch 2, dadurch gekennzeichnet, daß das inerte Gas überwiegend Helium enthält.

4. Verfahren nach einem der Ansprüche 1 bis 3, dadurch gekennzeichnet daß die Temperatur des ausgestoßenen inerten Gases zwischen der Schmelztemperatur des thermoplastischen Materials und der Verformungstemperatur des Substrats liegt.

5. Verfahren nach einem der Ansprüche 1 bis 4, dadurch gekennzeichnet, daß das Substrat aus Metall ist.

6. Verfahren nach einem der Allsprüche 1 bis 5, dadurch gekennzeichnet, daß das thermoplastische Material Polyethylen ist.

7. Verfahren nach Anspruch 6, dadurch gekennzeichnet, daß das Substrat ein Aluminiumband ist und der Gasstrahl (10) die Form eines Vorhangs hat.

8. Verfahren nach Anspruch 7, dadurch gekennzeichnet, daß die Temperatur des inerten Gases zwischen 300 und 700 °C liegt.

9. Vorrichtung zur Durchführung des Verfahrens nach einem der vorhergehenden Ansprüche, dadurch gekennzeichnet, daß sie mindestens eine Profildüse (4) zum Ausstoßen eines Gasstrahls (10) aufweist, die mit einer Inertgasquelle (7) über einen eine Heizeinrichtung (20) aufweisenden Kreis verbunden ist.

10. Vorrichtung nach Absatz 9, dadurch gekennzeichnet, daß die Düse (4) einen Ausstoßschlitz (5) aufweist und die Heizeinrichtung aus einem in dem Kreis (3) nahe der Düse (4) angeordneten elektrischen Widerstand (20) besteht.
